# EUROPEAN PATENT APPLICATION

(11) **EP 1 709 893 A1**
(43) Date of publication of application: **11.10.2006**
(21) Application number: 06112221.4
(22) Date of filing: 04.04.2006
(51) Int. Cl.: A47G 27/02

(54) **Method for overedging fabrics**

(30) Priority: 05.04.2005 BE 200500177
(71) Applicant: KOVANTEX BVBA, 8530 Harlebeke (BE)
(72) Inventor: Naessens, John, 8530 Harelbeke (BE)
(74) Representative: Ostyn, Frans

(57) **Abstract**

This invention relates to a method for overedging fabrics (1) comprising a top layer (2) and a bottom layer (3), provided with a backing, and in which the top layer and bottom layer are partially joined together at least in a first zone (A), the method comprising the following steps:
- removing the bottom layer (3b) together with the backing in a second zone in which the bottom layer is provided so that it is not joined to the top layer, and which zone lies on the border of the fabric;
- fixing the top layer (2b) of the second zone on the backing.

## Description

This invention relates, on the one hand, to a method for overedging fabrics comprising a top layer and a bottom layer, in which a backing is provided on at least part of the bottom layer, and in which the top layer and bottom layer are partially joined together at least in a first zone. On the other hand, this invention relates to fabrics that are overedged according to this method.

The field of application of the invention relates to fabrics that are used as floor coverings, such as, for example, carpets made of all possible suitable materials and decorative fabrics such as, for example, placemats, tablecloths, tablemats etc.

Fabrics are overedged in order to prevent unravelling of the edges and to improve the appearance. In order to achieve this, the outside edge (the border) of the fabric is folded over and stitched down on the bottom layer of the fabric. The result is a carpet with beautifully straight edging.

In order to obtain a thicker fabric, fabrics may be provided with a flexible backing (foam backing, felt, non-woven, ...) by means of a normally used method (e.g. by lamination). In the case of such fabrics the abovementioned technique for overedging can no longer be applied because the border can no longer be folded over on account of the fact that there is too much material.

A number of ways of overedging fabrics provided with a flexible backing are described in the prior art. For instance, according to the American patent publication US 3,012,919, a backing with smaller dimensions than those of the fabric has to be provided. By positioning the backing well on the rear side of the fabric, it is possible to fold over the edges of the fabric that are not provided with the backing and fix said edges to the backing. This solution has the disadvantage, however, that a great deal of time is lost during positioning of the backing, which means, in other words, that this method is not really efficient.

According to the American patent publication US 2,709,668, a fabric is provided with a backing, in particular latex foam. In order to overedge the fabric, the latex will first have to be scraped off the borders of the fabric, and the scraped edges will then be folded over. This method has the disadvantage, however, that it can be used only for fabric in the case of which the backing is made of a plastic foam. If other materials are used as backing, the method according to US 2,709,668 can no longer be used.

The object of this invention is to provide a new method of overedging carpets provided with a backing which is much more efficient and much more accurate than the already known methods.

The object of the invention is achieved by providing a method for overedging fabrics comprising a top layer and a bottom layer, in which a backing is provided on at least part of the bottom layer, and in which the top layer and bottom layer are partially joined together at least in a first zone, the method comprising the following steps:
- removing the bottom layer together with the backing in a second zone in which the bottom layer is provided so that it is not joined to the top layer, and which zone lies on the border of the fabric;
- fixing the top layer of the second zone on the backing.

The border of the fabric in this patent application means the zone lying along the outer periphery of the fabric.

By means of the abovementioned method it becomes possible to overedge fabrics provided with a backing ("thicker" fabrics). With the method according to the invention it becomes possible to remove the backing perfectly and quickly together with the bottom layer of the fabric. The fabric is overedged by then folding over the top layer of the fabric.

The fabric is preferably a carpet consisting of a top layer and a bottom layer. More particularly, the fabric is a decorative element, such as, inter alia, placemats, tablecloths, tablemats etc.

The removal of the bottom layer together with the backing in a second zone in which the bottom layer is provided so that it is not joined to the top layer is preferably carried out by cutting, which can be performed either manually or mechanically.

In a preferred method according to the invention the second zone, in which the bottom layer is provided so that it is not joined to the top layer, is formed during the weaving of the fabric. It should be pointed out here that after the weaving process the ends in the second zone can be joined together. However, these ends are then separated from each other during the finishing process, so that in the second zone, lying on the border of the fabric, the bottom layer is provided so that it is not joined to the top layer.

In a more preferred method according to the invention the backing is made from one of the materials selected from cloth, felt, plastic material or non-woven material, foam backing etc. The preferably flexible backing is fixed on the bottom layer of the fabric by means of a normally used method (e.g. by lamination).

In a special method according to the invention the top layer of the second zone is fixed on the backing by means of bonding with adhesive. Another possibility for fixing the top layer of the second zone on the backing is to stitch the top layer on the backing. Other known fixing methods for fixing the top layer of the second zone on the backing are also possible.

In a more advantageous method according to the invention the top layer of the second zone is folded over at least once before the top layer is fixed to the backing.

In a preferred method according to the invention the part of the top layer hanging loose is overstitched at its edge before being fixed on the backing, in order to prevent unravelling of the edge of the top layer.

In a most special method according to the invention a tape is provided on the edge of the top layer in order to improve the appearance. This can be performed before, during or after fixing of the top layer on the backing.

Another object of this patent application relates to an overedged fabric, in which the fabric is overedged by means of a method according to one of Claims 1 to 10.

This patent application further relates to a fabric, comprising a top layer and a bottom layer, and a backing fixed on the bottom layer, the top and the bottom layer being partially joined together at least in a first zone, and the fabric being provided with a second zone in which the bottom layer is provided so that it is not joined to the top layer and lies on the border of the fabric, in order to make it possible to overedge the fabric by means of a method according to one of Claims 1 to 10.

In order to clarify the features of this invention further and to indicate additional advantages and details of it, a more detailed description of the method used now follows. It will be clear that nothing in the description below can be interpreted as a limitation of the protection for this invention applied for in the claims.

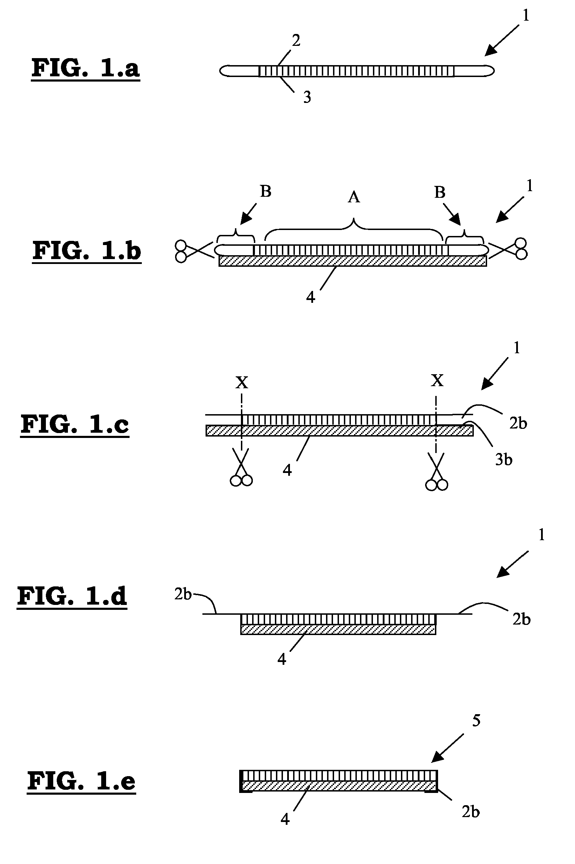

In this description reference is made by means of reference numerals to the appended drawing, in which figure 1 is an illustration of the various steps in the method according to the invention.

In order to obtain thicker fabrics, fabrics comprising a top layer (2) and a bottom layer (3), in which the top layer (2) and the bottom layer (3) are partially joined together at least in a first zone (A), are provided with a flexible backing (4) (foam backing, felt, non-woven, ...) by means of a normally used method (e.g. by lamination). The flexible backing (4) is preferably provided at least on the first zone (A) and can extend further without restriction onto a second zone (B). Such fabric (1) with a backing (4) provided on the bottom layer (3) is shown in Figure 1.b.

In order to be able to overedge such fabrics (1) by the method according to the invention, the fabric (1) is provided with a second zone (B) in which the bottom layer (3) is provided so that it is not joined to the top layer (2). The abovementioned second zone lies on the border of the fabric (1). In other words, according to this invention, a "pocket weave" is created on the border of the fabric.

It should be pointed out here that after the weaving process the ends in the second zone (B) can be joined together as shown in Fig. I.a and Fig. 1.b. Said ends are, however, then separated from each other during the finishing process, preferably after the backing (4) has been provided, so that a fabric such as that shown in Fig. l.c is obtained, in which in the second zone (B), lying on the border of the fabric (1), the bottom layer (3) is provided so that it is not joined to the top layer (2).

The size of said second zone (B) depends on the desired "material overlay", which depends, inter alia, on the dimensions of the fabric (1), the thickness of the backing (4), the finishing method, the wishes of the customer, ...

In order to achieve an overedged fabric (5) such as that shown in Figure 1.e, the method comprises the following steps:
- removing the bottom layer (3b) together with the backing (4) in a second zone (B) in which the bottom layer (3) is provided so that it is not joined to the top layer (2), and which zone lies on the border of the fabric;
- fixing the top layer (2b) of the second zone on the backing (4).

The removal of the bottom layer (3b) together with the backing (4) in a second zone (B) in which the bottom layer (3) is provided so that it is not joined to the top layer (2) is carried out as shown in Figure 1.c by means of cutting along cutting line X, which can be performed either manually or mechanically. The cutting line X is situated at the level of the transition from first zone (A) to second zone (B).

After the removal of the bottom layer (3b) together with the backing (4), only the top layer (2b) remains, as shown in Figure 1.d.The top layer (2b) of the second zone is then fixed on the backing (4) by stitching the top layer (2b) on the backing (4) and/or bonding it on said backing with adhesive, or by another known fixing method. If desired, before the top layer (2b) is fixed on the backing, the top layer (2b) of the second zone can be folded over at least once.

In order to prevent possible unravelling of the edge of the top layer (2b), the edge of said layer (2b) can be overstitched before the abovementioned top layer (2b) is fixed on the backing (4).

In another method of finishing the border a tape can be provided on the edge of the top layer before, during or after fixing of the top layer (2b) on the backing (4).

By the method according to the invention it is possible in a quick and simple manner to overedge fabrics provided with a backing (4), such as, for example, carpets, placemats, tablecloths, tablemats etc.

## Claims

1. Method for overedging fabrics (1) comprising a top layer (2) and a bottom layer (3), in which a backing (4) is provided on at least part of the bottom layer (3), and in which the top layer (2) and bottom layer (3) are partially joined together at least in a first zone (A), **characterized in that** the method comprises the following steps:
- removing the bottom layer (3b) together with the backing (4) in a second zone (B) in which the bottom layer (3) is provided so that it is not joined to the top layer (2), and which zone lies on the border of the fabric;
- fixing the top layer (2b) of the second zone on the backing (4).

2. Method according to claim 1, **characterized in that** the second zone (B), in which the bottom layer (3) is provided so that it is not joined to the top layer (2), is formed during the weaving of the fabric.

3. Method according to claim 1 or 2, **characterized in that** the backing (4) is made from one of the materials selected from fabric, felt, plastic material or non-woven material.

4. Method according to any one of claims 1 to 3, **characterized in that** the top layer (2b) of the second zone is fixed on the backing (4) by means of bonding with adhesive.

5. Method according to any one of claims 1 to 4, **characterized in that** the top layer (2b) of the second zone is fixed on the backing (4) by stitching the top layer (2b) to the backing (4).

6. Method for overedging fabrics according to any one of the preceding claims, **characterized in that** the top layer (2b) of the second zone is folded over at least once before the top layer (2b) is fixed to the backing (4).

7. Method according to any one of the preceding claims, **characterized in that** the part of the top layer (2b) hanging loose is overstitched at its edge before being fixed to the backing (4), in order to prevent unravelling of the edge of the top layer (2b).

8. Method according to any one of the preceding claims, **characterized in that** a tape is provided on the edge of the top layer (2b).

9. Method according to any one of the preceding claims, **characterized in that** the fabric is a carpet consisting of a top layer (2) and a bottom layer (3).

10. Method according to any one of claims 1 to 8, **characterized in that** the fabric is a decorative element such as placemats, tablecloths, tablemats etc.

11. Overedged fabric (5), **characterized in that** the fabric is overedged by means of a method according to one of the preceding claims.

12. Fabric (1), comprising a top layer (2) and a bottom layer (3), and a backing (4) provided on the bottom layer (3), in which the top layer (2) and the bottom layer (3) are partially joined together at least in a first zone (A), **characterized in that** the fabric (1) is provided with a second zone (B) in which the bottom layer (3) is provided so that it is not joined to the top layer (2) and lies on the border of the fabric (1), so that the fabric (1) can be overedged by means of a method according to any one of claims 1 to 10.
